# EUROPÄISCHE PATENTSCHRIFT

(11) **EP 0 600 932 B1**
(45) Veröffentlichungstag und Bekanntmachung des Hinweises auf die Patenterteilung: **14.02.1996**
(21) Anmeldenummer: 92916710.4
(22) Anmeldetag: 07.08.1992
(51) Int. Cl.: B01D 71/10, B01D 69/08, A61M 1/18, D01D 5/24

(54) **DIALYSEHOHLFADEN**
HOLLOW DIALYSIS FILAMENT
FIL CREUX DE DIALYSE

(30) Priorität: 17.08.1991 DE 4127278
(43) Veröffentlichungstag der Anmeldung: 15.06.1994
(73) Patentinhaber: Akzo Nobel N.V., NL-6824 BM Arnhem (NL)
(72) Erfinder: DÜNWEG, Gustav, D-5600 Wuppertal 2 (DE); BREIDOHR, Hans, Günter, D-5600 Wuppertal 2 (DE); BAURMEISTER, Ulrich, D-5600 Wuppertal 1 (DE); TILGNER, Hans, Georg, D-4330 Mülheim (DE); STEIN, Uwe, D-5600 Wuppertal 22 (DE)
(74) Vertreter: Fett, Günter
(86) Internationale Anmeldenummer: EP9201801
(87) Internationale Veröffentlichungsnummer: WO9303829

(56) Entgegenhaltungen:
- EP-A- 0 076 442
- EP-A- 0 086 365
- EP-A- 0 345 151
- DE-C- 2 842 835
- DE-C- 2 848 601
- GB-A- 2 090 187
- US-A- 4 882 223
- US-A- 4 919 809

## Beschreibung

Die Erfindung betrifft ein Verfahren zur Herstellung eines Dialysehohlfadens aus einer Lösung von Cellulose und/oder Cellulosederivaten und/oder Chitinderivaten und/oder Chitin, wobei die Konzentration an polymeren Stoffen 4 - 16 Gew.% bezogen auf das Gewicht der Lösung beträgt und der durchgehende Innenhohlraum von einem ein Gas enthaltenden Fluid gebildet wird, sowie eine nach diesem Verfahren hergestellte Dialysemembran.

Aus EP-B-0 076 442 ist ein Verfahren zur Herstellung einer Hohlfaser aus regenerierter Kupfer-Ammonium-Cellulose mit einer axial angeordneten zylindrischen Bohrung, die sich über die Faserlänge erstreckt, wobei die Bohrung ausschließlich mit Gas gefüllt ist und keine kontaminierenden Stoffe enthält, bekannt geworden, mit den Schritten:
1) Extrudieren einer Spinnlösung aus Kupfer-Ammonium-Cellulose durch eine ringförmige Öffnung, wodurch ein Faser-Extrudat mit einer Bohrung gebildet wird, während gleichzeitig in die Bohrung der Faser durch ein im Zentrum der ringförmigen Öffnung angeordnetes Einblasrohr Gas in das Faser-Extrudat eingeblasen wird;
2) Fallenlassen der Faser im freien Fall in einem Luftraum und Eintauchenlassen im wesentlichen senkrecht bis zu einer Tiefe von 2 bis 20 mm, ggf. auch bis zu einer Tiefe von bis zu 30 mm, unterhalb der Oberfläche eines Koagulationsbades nur unter dem Einfluß einer während des freien Falls gewonnenen, abwärts gerichteten Kraft;
3) Hindurchleiten des Faser-Extrudats durch das Koagulationsbad, wodurch eine Hohlfaser mit einer axial angeordneten zylindrischen Bohrung erhalten wird, und
4) Raffinieren und Trocknen der so gewonnenen Hohlfaser.

Die dazu erforderliche lange Luftstrecke erfordert Spinnlösungen mit einer hohen Viskosität. Außerdem ergeben sich bei der Forderung, den Faden im freien Fall bis zu 20 mm oder ggf. bis zu 30 mm tief in das Koagulationsbad eintauchen zu lassen, erhebliche Schwierigkeiten. Die Trockendehnung solcher Hohlfäden beträgt ca. 40% und die Naßdehnung 70%, wie sie auch bei konventionell gesponnenen Hohlfäden üblich sind.

Da die Hohlfäden aus reiner Cellulose hergestellt werden, sind die Biokompatibilitätseigenschaften wesentlich schlechter als bei solchen Membranen, die beispielsweise in geringem Maße modifiziert sind.

Da außerdem auf der Innenseite des Innenhohlraums keine unter normalen Umständen als kontaminierende

Innenflüssigkeiten bezeichneten Stoffe vorhanden sein dürfen, werden Möglichkeiten ausgeschlossen, durch eine Beschichtung mit geeigneten, üblicherweise unter die kontaminierenden Stoffe einzuordnenden Polymere, die Biokompatibilität zu verbessern. Auch mit der Cellulose reagierende Stoffe sind gemäß dieser Schrift nicht vorgesehen.

Die DD-A-261 041 offenbart eine Kapillarhohlmembran aus Regenerat-Cellulose (Viskose) für die Flüssigphasenpermeation, wobei der Innenhohlraum durch ein Gas oder eine Flüssigkeit erzeugt wird. Für die Erzeugung solcher Kapillarhohlmembranen sind übliche Viskosen mit hoher Koagulationsbereitschaft und die Verwendung mild koagulierender Fällbäder kennzeichnend.

Aus der EP-A-0 135 593 ist ein Dialysehohlfaden aus Cuproammoniumcellulose bekannt, der an der Außenseite eine Haut und an der inneren Oberfläche keinerlei Poren aufweist. Die Dehnung der besagten Hohlfäden fällt in den Bereich von +1,0 bis - 5,0%.

Die EP-B-0 175 948 beschreibt die Herstellung von unverstreckten Hohlfäden für die Dialyse durch Koagulieren einer Cuproammoniumcelluloselösung mit einer Cellulosekonzentration von 6,0 - 8,7 Gew.% und einer Viskosität von 500 - 1300 poises (20°C), die eine Filmstruktur mit einer Porosität von 15 - 25% besitzt, deren Poren 25 - 40 Å Durchmesser aufweisen und deren Ultrafiltrationsrate (UFR) 3,0 - 5,5 ml/h·m²·mmHg beträgt. Die Filmstruktur soll dabei im wesentlichen hautfrei und an der inneren Oberfläche im wesentlichen porenfrei sein.

Ein Hauptproblem bei der Dialyse ist die nachfolgend erläuterte "Biokompatibilität".

Die Verträglichkeit der Hämodialyse beim Patienten wird von verschiedenen Faktoren beeinflußt, wie durch den physischen und psychischen Zustand des Patienten, der sterilen Umgebung und insbesondere dem Dialysator, wozu als wichtiger Faktor die Biokompabilität der Hohlfäden im Dialysemodul eingeht. Daneben haben auch die Oberflächeneigenschaften des Polymers, die Membranstruktur und das Dialysator-Design einen deutlichen Einfluß auf die Biokompatibilität bei der Dialysebehandlung.

Die chemisch unterschiedlichen Strukturen der verschiedenen Polymere spielen bei der Biokompatibilität eine wichtige Rolle, wie beispielsweise bei der Komplement-Aktivierung (C5a-Bildung), der Hämolyse und der Thrombogenität.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei Dialysemembranen aus regenerierter Cellulose häufig ein weiterer Effekt auf, nämlich, daß bei der Behandlung eines Nierenkranken mit Dialysatoren mit Cellulose-Membranen in der ersten Zeit der Dialysebehandlung ein vorübergehender Leukozytenabfall stattfinden kann. Dieser Effekt wird als Leukopenie bezeichnet und muß durch eine Modifizierung der Membran zumindest weitgehend zurückgedrängt oder verhindert werden.

Die Leukopenie bei der Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer gleichartiger Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungnen durch eine Bestimmung der Komplement-Fragmente C3a und C5a.

In diesem Zusammenhang wird auf folgende Arbeiten hingewiesen: D.E. Chenoweth et al, Kidney International Vol. 24, Seiten 764 ff, 1983, und D.E. Chenoweth, Asaio-Journal Vol. 7, Seiten 44 ff, 1984.

Obwohl die klinische Bedeutung der Komplement-Aktivierung noch nicht geklärt ist, ist man bestrebt, diese bei der Hämodialyse möglichst auszuschließen.

Aufgabe der vorliegenden Erfindung ist es, Membranen mit verbesserter Dialysierleistung und Biokompatibilität bereitzustellen sowie ein dafür geeignetes, wirtschaftliches Herstellungsverfahren anzugeben.

Gelöst wird diese Aufgabe durch ein Herstellverfahren gemäß einem oder mehreren der Ansprüche 1 bis 14 sowie durch eine nach diesem Verfahren hergestellte Dialysemembran nach einem oder mehreren der Ansprüche 15 bis 24.

In EP-A-345 151 wird zwar beschrieben, daß zur Verbesserung der Biokompatibilität die Methode des Tauchspinnens einschließlich der chemischen Modifizierung der inneren Oberfläche des Hohlfadens angewandt werden kann. Hierzu wird jedoch dort vorgeschlagen, in das Zentrum des Hohlfadens eine Flüssigkeit, die eine mit Cellulose reagierende Substanz enthält, einzuführen.

Für die Herstellung erfindungsgemäßer Dialysemembranen können solche modifizierten Cellulosen verwendet werden, wie sie etwa in:
DE-A-39 01 945, DE-A-39 01 946, DE-A-39 01 947, DE-A-35 24 596, DE-A-36 38 531, DE-A-34 10 133, DE-A-33 41 113, DE-A-30 42 110, DE-C-28 23 985 und DE-A-40 17 745
beschrieben sind.

Im folgenden wird die Erfindung anhand von Figuren und Ausführungsbeispielen näher erläutert und beschrieben.

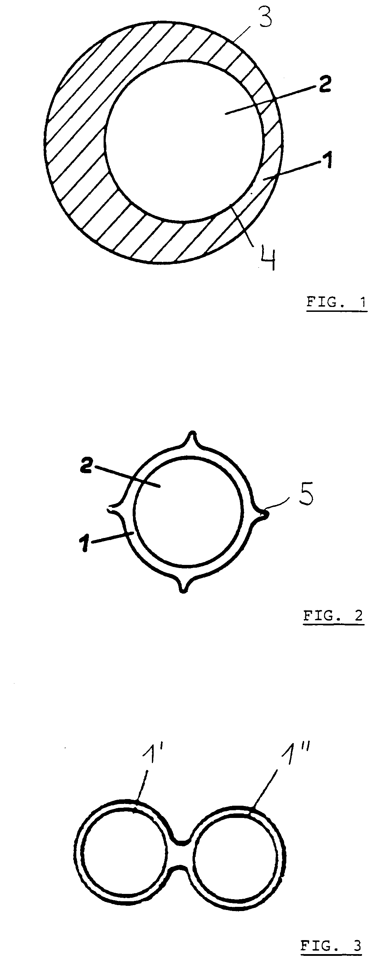

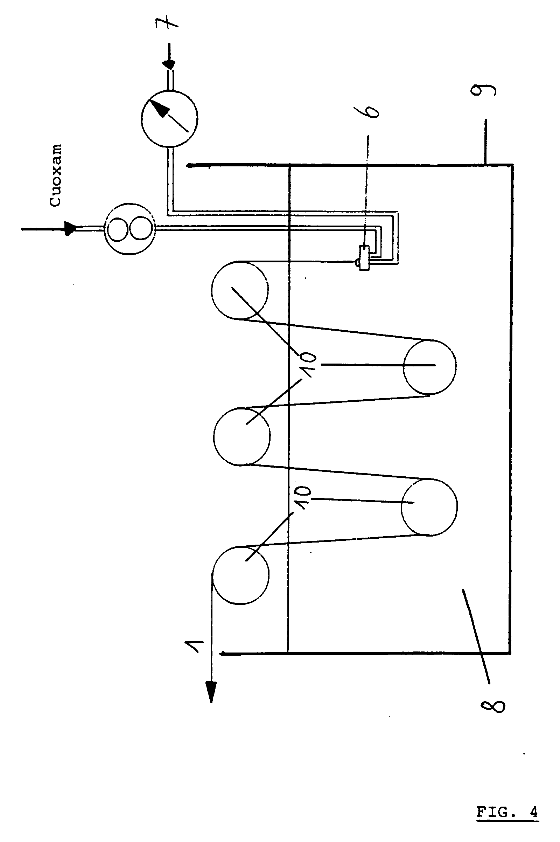

Dabei zeigen die Figuren 1, 2 und 3 die erfindungsgemäße Hohlfasermembran in unterschiedlichen Ausführungsformen. Die Figur 4 stellt ein Spinnschema dar, in dem die wesentlichen Merkmale des erfindungsgemäßen Verfahrens gezeigt werden.
Die Figuren 5 bis 10 zeigen FE-Rasterelektronenmikroskopaufnahmen der erfindungsgemäßen Hohlfäden.

Die schematischen, nicht maßstabsgerechten Darstellungen der Figuren 1 bis 4 wurden gewählt, weil bei maßstabsgerechter Darstellung die speziellen Einzelheiten der Ausführungsformen nur schwer erkennbar wären.

In Figur 1 ist der Querschnitt eines erfindungsgemäßen Hohlfadens 1 mit einem durchgehenden kreisförmigen Innenhohlraum 2, der im wesentlichen mit einem Gas gefüllt ist, dargestellt. Mit der Bezugsziffer 3 ist die äußere Oberfläche des Hohlfadens 1 bezeichnet, der einen ebenfalls kreisförmigen Außenquerschnitt aufweist. Die äußere Oberfläche 3 wird von einer dünnen Haut gebildet und weist feine Längsriefen auf. Der Hohlfaden 1 weist eine innere Oberfläche 4 auf, die durch physikalische und/oder chemische Mittel positiv modifiziert ist.

Die äußere Oberfläche 3 des Hohlfadens 1 kann konzentrisch zum Innenhohlraum 2 oder, wie in Figur 1 darstellt, exzentrisch zum Innenhohlraum 2 angeordnet sein. Die Mittelpunkte des kreisförmigen Innenhohlraums 2 und der kreisförmigen Oberfläche 3 sind bei dieser Ausführungsform im Abstand voneinander angeordnet, so daß deutlich sichtbar ein Bereich von maximaler Dicke der aus cellulosischem Material bestehenden Hohlfadenwand kontinuierlich in einen Bereich minimaler Wanddicke übergeht.

In der Figur 2 ist eine weitere Möglichkeit der Ausbildung des Profils bei den erfindungsgemäßen Dialysemembranen dargestellt. Die aus Cellulose, die aus Cuoxamlösungen regeneriert wurde, bestehende Membranwand der Hohlfadens 1 weist einen kreisförmigem Innenhohlraum 2 auf, während die äußere Oberfläche vier symmetrisch angeordnete längslaufende Rippen 5 aufweist.

Figur 3 zeigt den Querschnitt einer aus zwei kreisförmigen, durch einen Steg verbundener Hohlfäden bestehenden Dialysemembran.

In dem Spinnschema (Figur 4) wird die Cuoxamspinnlösung mittels einer Spinnpumpe den Spinnschlitzen einer Spinndüse 6 zugeführt. Der zentralen Bohrung der Spinndüse 6 wird das zu wenigstens 80%, vorzugsweise zu wenigstens 90%, aus einem Gas bestehende Fluid 7 zur Ausbildung des Innenhohlraumes zugeführt. Im Koagulationsbad 8, welches beispielsweise in einer Wanne 9 vorliegt, wird der aus der Spinndüse unmittelbar in das Koagulationsbad aufsteigende Lösungsstrahl koaguliert und verfestigt. Nach ausreichender Verfestigung kann der sich ausbildende Hohlfaden 1 an Walzen 10 umgelenkt werden, um eine ausreichende Verweilzeit im Koagulationsbad sicherzustellen.

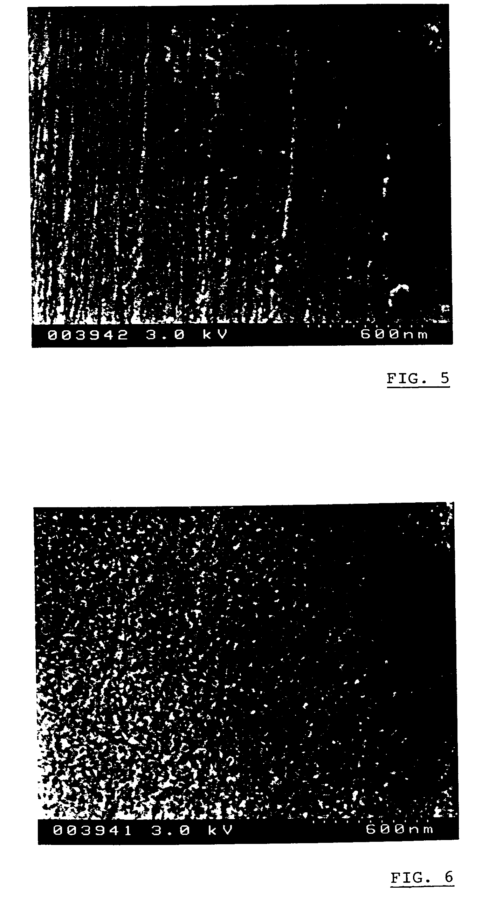

Die Figur 5 zeigt eine FE-REM-Aufnahme bei 45000-facher Vergrößerung auf eine Außenwand des erfindungsgemäßen Hohlfadens, während Figur 6 bei gleicher Vergrößerung die Innenwand des gleichen Hohlfadens zeigt (Beispiel 1).

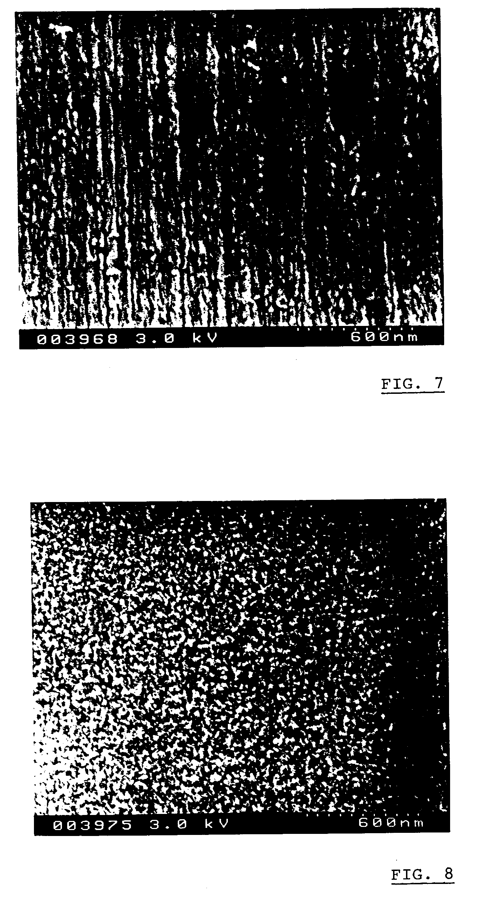

Die Figuren 7 und 8 sind entsprechende FE-REM-Aufnahmen bei gleicher Vergrößerung, jedoch bei erfindungsgemäßen Hohlfäden, die einen geringen Anteil an modifizierter Cellulose enthalten (Beispiel 3).

Die Figur 9 zeigt eine FE-REM-Aufnahme der Bruchfläche in der Umgebung des Innenrandes von dem in Figur 5 in Aufsicht gezeigten Hohlfaden mit Vergrößerung von 27000 : 1.

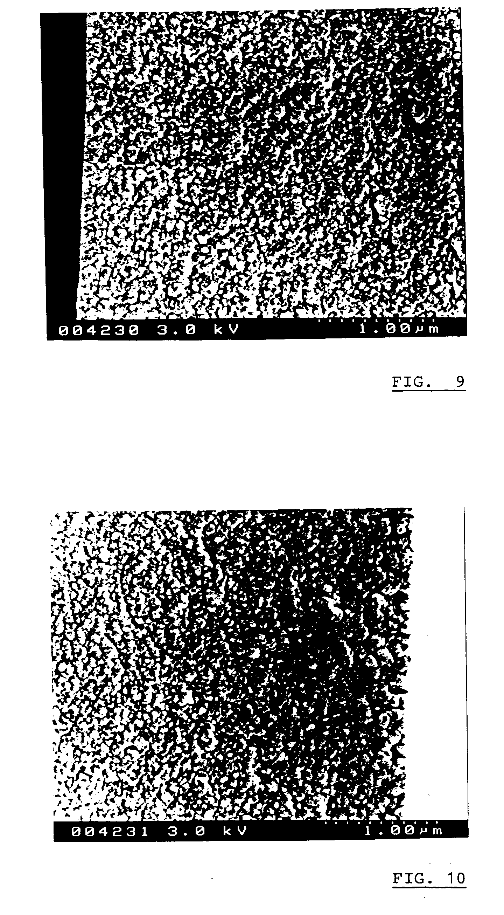

Die Figur 10 zeigt eine der Figur 9 entsprechende FE-REM-Aufnahme, jedoch von den Bruchflächen in der Umgebung des Außenrandes des gleichen Hohlfadens bei gleicher Vergrößerung.

Die Erfindung wird anhand der nachfolgenden Beispiele näher erläutert.

### Beispiel 1

In ein Fällbad gemäß Figur 4 wurde eine Hohlfadenspinndüse bekannter Bauart mit einer Austrittsfläche für die Wandbildende Cuoxamspinnlösung von 0,08 mm² so eingesetzt, daß die Austrittsöffnungen senkrecht nach oben wies und die Austrittsfläche parallel zur Fällbadoberfläche lag.
Das Fällbad enthielt 140 g/l NaOH, 6 g/l Ammoniak und 0,8 g/l Cu in Wasser bei 20 °C. Die Badtiefe zwischen Düsenaustrittsfläche und Badoberfläche betrug 18 cm. Mittels einer Zahnraddosierpumpe wurde durch den Ringschlitz der Hohlfadenspinndüse 6,0 ml/min Cuoxam-Spinnlösung mit einer Konzentration von 9,0 % Cellulose, 8,0 % Ammoniak und 3,8 % Cu gefördert, während gleichzeitig 2,2 ml/min Stickstoff bei einem Druck von 22 mbar durch die Innenfüllungszuführung in den Innenraum des sich bildenden Hohlfadens gefördert wurde.
Die wandbildende Cuoxamspinnlösung erstarrte unmittelbar oberhalb der Austrittsöffnung unter Bildung der Norman-Verbindung und konnte dann ohne Gefahr der Verformung weitergefördert werden. Das hohlraumfüllende Gas verhinderte den Kollaps des am Anfang noch sehr weichen Hohlfadens. Da Spinnlösung und Gas gleichzeitig aus der Düse austraten, bildete sich ein im Verhältnis zum Fällbad sehr leichter Koagulatklumpen, der sich nach 2 - 5 s von der Düse löste und an die Oberfläche des Fällbades stieg wie auch der nachfolgende, nun richtig dimensionierte Hohlfaden.
Das Anspinnen wurde durch das Ausnutzen des Auftriebes wesentlich erleichtert.
Das auf der Badoberfläche schwimmende Koagulat wurde über Umlenkungen weitergeführt durch den zweiten Abschnitt des Fällbades zur vollständigen Verfestigung und weiter durch die entkupfernden und entsäuernden Waschbäder.

Am Ende durchlief der nun aus reiner Cellulose bestehende Hohlfaden ein Weichmacherbad mit 10 g/l Glyzerin und 400 g/l Isopropylalkohol in Wasser und wurde dann auf einem Walzentrockner bei 75 - 80 °C Kontakttemperatur auf einen Wassergehalt von 10 % getrocknet.
Danach erfolgte eine Aufwicklung je nach Bedarf auf eine Kreuzspule oder, nach Aufbringen einer Ondulation, auf eine Bündelwickelmaschine.
Während aller Behandlungsschritte befand sich im Innenraum der Hohlfaser lediglich das bei der Entstehung eingefüllte Gas.
Der fertige Hohlfaden zeigte die gewünschte konzentrische Form, allerdings von größerer Gleichmäßigkeit als bei Anwendung eines Luftspaltes und Spinnen von oben nach unten, da die hier negativ wirkenden Einflüsse von Viskositätsunterschieden, Luftbewegungen und Oberflächenspannung vermieden wurden.
Während die Austrittsgeschwindigkeit der Spinnlösung an der Düse 75,0 m/min betrug, war die Geschwindigkeit der ersten Umlenkstelle oberhalb des Fällbades 71 m/min, die Geschwindigkeiten der Folgebäder steigerten sich in sehr kleinen Beträgen zur Kompensation der Reibungen.
Das Trocknen erfolgte mit von Walze zu Walze abnehmender Geschwindigkeit, um einen ungehinderten Schrumpf bei Wasserabgabe zu ermöglichen.
Der so erzeugte Hohlfaden hatte eine Wandstärke von 8 µm und einen inneren Durchmesser von 200 µm.
Die Bruchfestigkeit betrug 110 cN, die Bruchdehnung trocken 52 % und 102 % naß.
Aus diesem Hohlfaden hergestellte Prüfkörper zeigten folgende Leistungsdaten:

| | |
|---|---|
| Ultrafiltrationsrate | = 5,8 ml/min·m²·mmHg |
| Dialysierleistung für Vitamin B₁₂ | = 7,2 cm/min·10⁻³ |
| Dialysierleistung für Kreatinin | = 52,0 cm/min·10⁻³ |

Diese Werte liegen aufgrund der spannungsfreien Herstellung deutlich über vergleichbaren Werten einer Cuprophanhohlfaser konventioneller Art.

### Beispiel 2

In einer Spinnvorrichtung gemäß Beispiel 1 wurde eine Düse eingesetzt mit einer Austrittsfläche von 0,12 mm² und eine Spinnlösung mit den Konzentrationen:
6,35 % Cellulose, 8,0 % Ammoniak und 2,65 % Cu.
Die extrudierte Spinnlösungsmenge betrug 6,5 ml/min, die Gasmenge betrug 1,6 ml/min bei einem Druck von 22 mbar. Die Eintauchtiefe war unverändert 18 cm und die Konzentration des Fällbades 140 g/l NaOH, 6 g/l Ammoniak und 0,8 g/l Cu in Wasser bei 20 °C.
Die Austrittsgeschwindigkeit an der Düse betrug 59,2 m/min, die Geschwindigkeit der ersten Umlenkung betrug 50,2 m/min. Der Transport des Hohlfadens durch die weiteren Behandlungsbäder erfolgte wiederum unter geringstmöglicher Spannung.
Das Nachbehandlungsbad enthielt 80 g/l Glyzerin und 400 g/l Isopropylalkohol in Wasser und die Trocknungstemperatur lag bei 75 - 95 °C.
Die Endaufmachung erfolgt wie in Beispiel 1.
Der so gewonnene Hohlfaden hatte ein Bruchfestigkeit von 70 cN und eine Bruchdehnung von 56 % trocken bzw. 110 % naß.

Die Wandstärke betrug 16 µm und der Innendurchmesser 205 µm. An diesem Hohlfaden wurden folgende Leistungsdaten gemessen:

| | |
|---|---|
| Ultrafiltrationsrate | = 56 ml/min·m²·mmHg |
| Dialysierleistung Vitamin B₁₂ | = 14,8 cm/min·10⁻³ |
| Dialysierleistung Kreatinin | = 58,0 cm/min·10⁻³ |

Der Siebkoeffizient für Cytochrom C betrug 0,86, für Albumin 0,06.

### Beispiel 3

In einer Spinnvorrichtung gemäß Beispiel 2 wurde eine Spinnlösung verwandt, deren Cellulose zu 95 % aus reiner Linterscellulose, zu 5 % jedoch aus Diethylaminoethylcellulose mit einem DS von 0,4 bestand. Der Stickstoffgehalt des Regenerates betrug 0,14 %. Die übrigen Bedingungen blieben unverändert.
Der so hergestellte Hohlfaden zeigte folgende Daten:
Wandstärke 16,5 µm, Innendurchmesser 202 µm
Bruchfestigkeit 68 cN
Bruchdehnung 52 % trocken bzw. 106 % naß

| | |
|---|---|
| Ultrafiltrationsrate | = 59,0 ml/min·m²·mmHg |
| Dialysierleistung Vitamin B₁₂ | = 16,3 cm/min · 10⁻³ |
| Dialysierleistung Kreatinin | = 56,0 cm/min · 10⁻³ |
| Siebkoeffizient Cytochrom C | = 0,88 |
| Siebkoeffizient Albumin | = 0,08 |

Reduzierung der C5a Komplement-Aktivierung ca. 68 %

### Beispiel 4

Unter gleichen Bedingungen wie Beispiel 3 wurde eine Spinnlösung verwandt, deren Cellulose zu 94 % aus reiner Linterscellulose, zu 6 % jedoch aus Benzylcellulose mit einem Benzylierungsverhältnis von 1 : 0,23 bestand. Der hieraus gewonnene Hohlfaden wies folgende Daten auf:
Wandstärke 15,4 µm, Innendurchmesser 202 µm
Bruchfestigkeit 76 cN
Bruchdehnung 51 % trocken bzw. 100 % naß.

| | |
|---|---|
| Ultrafiltrationsrate | = 51,0 ml/min · m² · mmHg |
| Dialysierleistung Vitamin B₁₂ | = 14,8 cm/min · 10⁻³ |
| Dialysierleistung Kreatinin | = 59,0 cm/min · 10⁻³ |
| Siebkoeffizient Cytochrom C | = 0,85 |
| Siebkoeffizient Albumin | = 0,04 |

Reduzierung der C5a Komplement-Aktivierung ca. 78 %

### Beispiel 5

Zur Reduzierung der Albumindurchlässigkeit und Verminderung der Gefahr der Rückfiltration und Endotoxineintragung bei Verwendung hochpermeabler Membranen unter Hemofiltrationsbedingungen wurde eine Hohlfadenmembran hergestellt, welche an ihrer Innenseite, im Gegensatz zu konventionellen HF - Membranen, eine diskrete Schicht höherer Stoffdichte enthielt.
Erreicht wurde dieser Effekt unter Bedingungen von Beispiel 3, jedoch mit einem Innenfüllungsgas, welches zu 80 Vol.% aus Stickstoff und zu 20 Vol.% aus Schwefeldioxid bestand. Die eingesetzten Gasmengen und wandbildender Spinnlösung blieben unverändert, desgleichen die weiteren Nachbehandlungsschritte.
Das mit dem Stickstoff zugeführte Schwefeldioxid wirkte als schweflige Säure fällend auf die Innenwand.
Während bei herkömmlichen Verfahren die Fällung an der Außenwand beginnt, und dort eine dichtere Schicht erzeugt, wobei der Rest der Wand von relativ gleichmäßiger poriger Struktur verbleibt, konnte in diesem Fall eine solche Schicht von 1 - 3 µm Stärke auch an der Innenwand erzeugt werden.
Die Gesamtwandstärke nahm um 1 µm auf 15,5 µm ab, der Innendurchmesser blieb bei 200 µm.
Während die UFR leicht auf 52 ml/min·m²·mmHg zurückging, blieben die diffusiven Permeabilitäten unverändert.
Anders verhielten sich die Siebkoeffizienten: der Wert für Cytochrom C sank auf 0,77, der für Albumin auf 0,004. Die Reduzierung der C5a Komplement-Aktivierung erreichte 70 %.
Bruchfestigkeit und Dehnung änderten sich nicht signifikant.

### Beispiel 6

Bei Verwendung von Kapillarmembranen in Dialysatormodulen ist es notwendig, daß diese nicht vollständig glatt sind, sondern eine diskrete, in sehr kurzen Abständen auftretende Verbiegung aufweisen. Bei glatten Hohlfäden besteht die Gefahr des Aneinanderklebens und damit der Strähnenbildung im Bündel. Dieser Effekt führt zu Kanalbildung im Dialysatraum und damit zur erheblichen Leistungsminderung des Dialysators.
Der verformte Hohlfaden hingegen läßt sich sicher zu lockeren, gleichmäßig gefüllten Bündeln assemblieren und garantiert so eine optimale Dialysatorleistung.
Diese notwendige lockere Bündelung kann man auch erreichen, wenn dem Hohlfaden an der Außenseite berührungsverhindernde Profile aufgebracht werden, z.B. in Längsrichtung verlaufende nach außen gerichtete Stege.
Bei konventionellem Spinnen über Luftspalt im freien Fall ist die Herstellung solcher Stege nur unter ganz speziellen Bedingungen möglich, indes jedoch beim hier angewandten Tauchspinnen von unten nach oben gut möglich.
Das sofortige Erstarren der Spinplösung gestattet es, beliebige Profile im Gießschlitz anzuwenden und die Profile im Querschnitt der Membranwand zu erhalten.
Im hier beschriebenen Beispiel wurde eine Hohlfadenspinndüse benutzt, deren Austrittsschlitz für die wandbildende Spinnlösung an vier gleichmäßig verteilten Stellen am äußeren Umfang mit nach außen gerichteten halbrunden Ausbuchtungen versehen war.
Die gesamt Austrittsfläche betrug 0,078 mm², die Menge der eingesetzten Spinnlösung war 5,0 ml/min und die Austrittsgeschwindigkeit an der Düse betrug 64,1 m/min.

Als Innenfüllung wurden 1,6 ml/min Stickstoff bei 22 mbar verwendet. Die Geschwindigkeit der ersten Umlenkung betrug 52,1 m/min. Der unter diesen Bedingungen entstandene Hohlfaden zeigte an seiner Querschnittsfläche in der Tat das angestrebte Profil von vier gleichmäßig über den Umfang verteilten Stegen mit abgerundeten Kanten von 4 - 5 µm Höhen bei einer Wandstärke von 9 µm an den freien Strecken der Membranwand und einem Innendurchmesser von 198 µm.
Diese Abmessungen sowie das besagte Profil blieben über eine beliebige endlose Länge im erwünschten Maße konstant.
Aus diesen Hohlfäden wurden nach Verlassen des Trockners Bündel für Testmodule so hergestellt, daß eine zusätzliche Veränderung der Hohlfadenform durch Druckstellen ausgeschlossen war.
Die Bündel zeigten einen lockeren Aufbau mit gleichmäßiger Verteilung über den Bündelquerschnitt.
Die Vermessung der hieraus hergestellten Testmodule zeigte folgenden Verlauf :

| | |
|---|---|
| Füllung des Dialysatraumes: | völlig problemlos |
| Kanalbildung: | ohne Befund |
| Ultrafiltrationsrate: | 6,4 ml/min·m²·mmHg |
| Clearance Harnstoff: | 172 ml/min ± 6,3 |
| Clearance Kreatinin: | 161 ml/min ± 4,0 |
| Clearance Vitamin B₁₂: | 84 ml/min ± 1,8 |
| Q_{B} = 200 ml/min, | |
| Q_{D} = 500 ml/min, | |
| F = 1 m² , | |
| n = 6 | |

## Patentansprüche

1. Verfahren zur Herstellung eines Dialysehohlfadens aus einer Lösung von Cellulose und/oder Cellulosederivaten und/oder Chitinderivaten und/oder Chitin, wobei die Konzentration an polymeren Stoffen 4 - 16 Gew.% bezogen auf das Gewicht der Lösung beträgt und der durchgehende Innenhohlraum von einem ein Gas enthaltenden Fluid gebildet wird, dadurch gekennzeichnet, daß die Lösung durch eine Spinndüse, die am Boden eines mit einer verdünnten Lauge oder einer verdünnten Säure gefüllten Behälters angeordnet ist, gepreßt wird, daß man einen Strahl der koagulierenden Lösung an die Oberfläche der Lauge oder Säure aufsteigen läßt, wobei das Verhältnis der linearen Steiggeschwindigkeit des Strahles zur Austrittsgeschwindigkeit aus der Spinndüse 0.90-0.96 beträgt, und daß man den koagulierten Strahl in Form eines Hohlfadens über Leitrollen durch alkalische und/oder saure und/oder neutrale Waschbäder und/oder Behandlungsbäder leitet, trocknet und aufwickelt, wobei das den Innenhohlraum bildende Fluid aus 80 bis 100 Vol.% eines inerten Gases und 0 bis 20 Vol.% eines mit der Cellulose reagierenden Gases und/oder einer die Oberflächenstruktur des Innenhohlraums beeinflussenden Flüssigkeit besteht und das Fluid mit einer Druckdifferenz von 100 - 450 Pa gegenüber der Summe aus statischem Druck und Atmosphärendruck durch die Innenbohrung der Spinndüse gedrückt wird.

2. Verfahren nach Anspruch 1, dadurch gekennzeichnet, daß das Fluid aus wenigstens 90 Vol.% eines inerten Gases und höchstens aus 10 Vol.% eines mit der Cellulose reagierenden Gases und/oder einer die Oberflächenstruktur des Innenhohlraums beeinflussenden Flüssigkeit besteht.

3. Verfahren nach Anspruch 1 oder 2, dadurch gekennzeichnet, daß die Viskosität der Spinnlösung 500 - 1000 poise beträgt.

4. Verfahren nach Anspruch 1 oder 2, dadurch gekennzeichnet, daß die am Boden angeordnete Spinndüse in eine geringe Schicht einer nicht-koagulierenden Flüssigkeit eintaucht.

5. Verfahren nach Anspruch 1 oder 2, dadurch gekennzeichnet, daß die Fäden vor der Trocknung im Verhältnis 1 : 1,1 bis 1 : 1,5 verstreckt werden.

6. Verfahren nach Anspruch 1 oder 2, dadurch gekennzeichnet, daß das Fluid ein Gemisch aus Stickstoff und Ethylenoxid und/oder Propylenoxid ist.

7. Verfahren nach Anspruch 1 oder 2, dadurch gekennzeichnet, daß das Fluid ein Gemisch aus Stickstoff und Ethylen und/oder Propylen ist.

8. Verfahren nach Anspruch 1 oder 2, dadurch gekennzeichnet, daß das Fluid ein Gemisch aus Stickstoff und Acrylsäure und/oder Acrylat ist.

9. Verfahren nach Anspruch 1 oder 2, dadurch gekennzeichnet, daß das Fluid ein Gemisch aus Stickstoff und Diisocyanat ist.

10. Verfahren nach Anspruch 1 oder 2, dadurch gekennzeichnet, daß flüchtige Flüssigkeiten mit Luft oder Stickstoff als Trägergas zur Ausbildung des Innenhohlraums benutzt werden.

11. Verfahren nach Anspruch 10, dadurch gekennzeichnet, daß die flüchtige Flüssigkeit ein Glycerin-Alkoholgemisch ist.

12. Verfahren nach Anspruch 1 oder 2, dadurch gekennzeichnet, daß ein Gas mit einer darin fein verteilten Flüssigkeit zur Ausbildung des Innenhohlraums benutzt wird.

13. Verfahren nach Anspruch 12, dadurch gekennzeichnet, daß die fein verteilte Flüssigkeit aus einer in einem geeigneten Lösungsmittel gelösten modifizierten Cellulose besteht.

14. Verfahren nach Anspruch 12 oder 13, dadurch gekennzeichnet, daß es sich um ein Aerosol handelt.

15. Dialysemembran aus einem regenerierten cellulosischen Polymer in Form eines Hohlfadens mit einem durchgehenden Innenhohlraum, der im wesentlichen mit einem Gas gefüllt ist, wobei der Hohlfaden eine poröse innere und eine äußere Oberfläche besitzt, dadurch gekennzeichnet, daß der Hohlfaden nach dem Verfahren von Anspruch 1 erhältlich ist.

16. Dialysemembran nach Anspruch 15, dadurch gekennzeichnet, daß der Hohlfaden (1) eine Trockendehnung von wenigstens 50% und eine Naßdehnung von wenigstens 100% aufweist.

17. Dialysemembran nach Anspruch 15 oder 16, dadurch gekennzeichnet, daß das regenerierte cellulosische Polymer eine modifizierte Cellulose und/oder ein modifiziertes Chitin und/oder Chitin ist.

18. Dialysemembran nach Anspruch 17, dadurch gekennzeichnet, daß der Substitutionsgrad der modifizierten Cellulose bzw. des modifizierten Chitins 0,02 bis 0,4 beträgt.

19. Dialysemembran nach einem oder mehreren der Ansprüche 15 bis 18, dadurch gekennzeichnet, daß die innere Oberfläche (4) aus einem von dem regenerierten cellulosischen Polymer verschiedenen Polymer gebildet ist.

20. Dialysemembran nach Anspruch 19, dadurch gekennzeichnet, daß das von dem regenerierten cellulosischen Polymer verschiedene Polymer aus einem Acrylmonomer und/oder einem Olefin und/oder einem Diolefin gebildet ist.

21. Dialysemembran nach einem oder mehreren der Ansprüche 15 bis 20, dadurch gekennzeichnet, daß der Querschnitt des Hohlfadens (1) senkrecht zur Fadenachse so ausgebildet ist, daß die Wanddicke des Hohlfadens (1) längs seines Umfangs mindestens einmal kontinuierlich bis zu einer Maximaldicke zunimmt und bis zu einer Minimaldicke abnimmt und daß das Verhältnis von Maximaldicke zu Minimaldicke im statistischen Mittelwert 2 bis 6 beträgt.

22. Dialysemembran nach einem oder mehreren der Ansprüche 15 bis 21, dadurch gekennzeichnet, daß sie aus zwei oder mehreren gemeinsam ersponnenen Hohlfäden (1',1''), die parallel zu den Hohlfadenachsen miteinander verbunden sind, besteht.

23. Dialysemembran nach einem oder mehreren der Ansprüche 15 bis 22, dadurch gekennzeichnet, daß der Querschnitt des Hohlfadens (1,1',1'') senkrecht zur Fadenachse profiliert ausgebildet ist.

24. Dialysemembran nach Anspruch 23, dadurch gekennzeichnet, daß der Hohlfaden (1,1',1'') längs der Fadenachse außen eine oder mehrere rippenartige Verdickungen aufweist.

## Claims

1. Method for the preparation of a hollow dialysis filament from a solution of cellulose and/or cellulose derivatives and/or chitin derivatives and/or chitin, with the concentration of polymeric materials being 4 - 16 wt.% referred to the weight of the solution and the continuous internal hollow space being formed by a fluid containing a gas, characterised in that the solution is forced through a spinneret, which is placed on the base of a tank filled with a dilute alkaline solution or a dilute acid, that a jet of the coagulating liquid is made to rise to the surface of the alkaline solution or acid, with the ratio of the linear rising velocity of the jet to the discharge velocity from the spinneret being 0.90-0.96, and that the coagulated jet in the form of a hollow filament is passed over guide rolls through alkaline and/or acidic and/or neutral washing baths and/or treatment baths, dried and wound up, with the fluid forming the internal hollow space consisting of from 80 to 100 vol.% of an inert gas and of from 0 to 20 vol.% of a gas which reacts with the cellulose and/or of a liquid which affects the surface structure of the internal hollow space, and with the fluid being forced through the internal bore of the spinneret at a pressure difference of from 100 - 450 Pa as compared with the sum of the static pressure and the atmospheric pressure.

2. Method according to claim 1, characterised in that the fluid consists of at least 90 vol.% of an inert gas and at most 10 vol.% of a gas which reacts with the cellulose and/or of a liquid which affects the surface structure of the internal hollow space.

3. Method according to claim 1 or 2, characterised in that the viscosity of the spinning solution is 500 - 1000 poise.

4. Method according to claim 1 or 2, characterised in that the spinneret placed on the base is immersed in a shallow layer of a non-coagulating liquid.

5. Method according to claim 1 or 2, characterised in that prior to being dried the filaments are stretched in the ratio 1 : 1.1 to 1 : 1.5.

6. Method according to claim 1 or 2, characterised in that the fluid is a mixture of nitrogen and ethylene oxide and/or propylene oxide.

7. Method according to claim 1 or 2, characterised in that the fluid is a mixture of nitrogen and ethylene and/or propylene.

8. Method according to claim 1 or 2, characterised in that the fluid is a mixture of nitrogen and acrylic acid and/or acrylate.

9. Method according to claim 1 or 2, characterised in that the fluid is a mixture of nitrogen and diisocyanate.

10. Method according to claim 1 or 2, characterised in that volatile liquids together with air or nitrogen as carrier gas are used for forming the internal hollow space.

11. Method according to claim 10, characterised in that the volatile liquid is a glycerol-alcohol mixture.

12. Method according to claim 1 or 2, characterised in that a gas having a liquid finely dispersed therein is used for forming the internal hollow space.

13. Method according to claim 12, characterised in that the finely dispersed liquid consists of a modified cellulose dissolved in a suitable solvent.

14. Method according to claim 12 or 13, characterised in that it relates to an aerosol.

15. Dialysis membrane composed of a regenerated-cellulose polymer in the form of a hollow filament having a continuous internal hollow space, which is filled substantially with a gas, with the hollow filament possessing a porous internal surface and an external surface, characterised in that the hollow filament is obtainable by the method according to claim 1.

16. Dialysis membrane according to claim 15, characterised in that the hollow filament (1) has a dry elongation of at least 50% and a wet elongation of at least 100%.

17. Dialysis membrane according to claim 15 or 16, characterised in that the regenerated-cellulose polymer is a modified cellulose and/or a modified chitin and/or chitin.

18. Dialysis membrane according to claim 17, characterised in that the degree of substitution of the modified cellulose respectively of the modified chitin is 0.02 to 0.4.

19. Dialysis membrane according to one or more of claims 15 to 18, characterised in that the internal surface (4) is formed from a polymer which is different from the regenerated-cellulose polymer.

20. Dialysis membrane according to claim 19, characterised in that the polymer which is different from the regenerated-cellulose polymer is formed from an acrylic monomer and/or an olefin and/or a diolefin.

21. Dialysis membrane according to one or more of claims 15 to 20, characterised in that the cross-section of the hollow filament (1) vertical to the axis of the filament is formed so that the wall thickness of the hollow filament (1) along the circumference thereof at least once increases continuously up to a maximum thickness and decreases to a minimum thickness and that the ratio of the maximum thickness to the minimum thickness is, on statistical average, from 2 to 6.

22. Dialysis membrane according to one or more of claims 15 to 21, characterised in that it consists of two or more jointly spun hollow filaments (1', 1''), which are joined to one another parallel to the axis of the hollow filament.

23. Dialysis membrane according to one or more of claims 15 to 22, characterised in that the cross-section of the hollow filament (1, 1', 1'') is formed having a profile vertical to the axis of the filament.

24. Dialysis membrane according to claim 23, characterised in that the hollow filament (1, 1', 1'') possesses one or more rib-shaped thickenings externally along the axis of the filament.

## Revendications

1. Procédé de préparation d'une fibre creuse pour dialyse, à partir d'une solution de cellulose et/ou de dérivés de cellulose et/ou de chitine et/ou de dérivés de chitine, dans lequel la teneur en matières polymères, rapportée au poids de la solution, vaut de 4 à 16 % en poids et la lumière intérieure continue est formée à l'aide d'un fluide contenant un gaz, caractérisé en ce qu'on fait passer la solution, par pression, par une filière disposée au fond d'un récipient rempli d'une lessive alcaline diluée ou d'un acide dilué, en ce qu'on laisse un filet de solution en train de coaguler monter à la surface de l'acide ou de la lessive alcaline, le rapport de la vitesse linéaire de montée du filet à sa vitesse de sortie de la filière valant de 0,90 à 0,96, et en ce qu'on achemine le filet coagulé sous la forme de fibre creuse, par l'intermédiaire de rouleaux de guidage, à travers des bains d'eau et/ou des bains de traitement, alcalins et/ou acides et/ou neutres, puis on le fait sécher et on l'enroule, le fluide qui sert à former la lumière intérieure étant constitué de 80 à 100 % en volume d'un gaz inerte et de 0 à 20 % en volume d'un gaz réagissant avec la cellulose et/ou d'un liquide influençant la structure de la surface de la lumière intérieure, et le fluide étant envoyé sous pression par le trou intérieur de la filière, avec une différence de pression de 100 à 450 Pa par rapport à la somme de la pression statique et de la pression atmosphérique.

2. Procédé conforme à la revendication 1, caractérisé en ce que le fluide est constitué d'au moins 90 % en volume d'un gaz inerte et d'au plus 10 % en volume d'un gaz réagissant avec la cellulose et/ou d'un liquide influençant la structure de la surface de la lumière intérieure.

3. Procédé conforme à la revendication 1 ou 2, caractérisé en ce que la viscosité de la solution à filer vaut de 500 à 1000 poises.

4. Procédé conforme à la revendication 1 ou 2, caractérisé en ce que la filière disposée au fond plonge dans une mince couche d'un liquide non coagulant.

5. Procédé conforme à la revendication 1 ou 2, caractérisé en ce qu'on étire les fibres en un rapport de 1/1,1 à 1/1,5 avant le séchage.

6. Procédé conforme à la revendication 1 ou 2, caractérisé en ce que le fluide est un mélange d'azote et d'oxyde d'éthylène et/ou d'oxyde de propylène.

7. Procédé conforme à la revendication 1 ou 2, caractérisé en ce que le fluide est un mélange d'azote et d'éthylène et/ou de propylène.

8. Procédé conforme à la revendication 1 ou 2, caractérisé en ce que le fluide est un mélange d'azote et d'acide acrylique et/ou d'acrylate.

9. Procédé conforme à la revendication 1 ou 2, caractérisé en ce que le fluide est un mélange d'azote et de diisocyanate.

10. Procédé conforme à la revendication 1 ou 2, caractérisé en ce qu'on utilise, pour former la lumière intérieure, des liquides volatils avec de l'air ou de l'azote comme gaz vecteur.

11. Procédé conforme à la revendication 10, caractérisé en ce que le liquide volatil est un mélange de glycérine et d'alcool.

12. Procédé conforme à la revendication 1 ou 2, caractérisé en ce qu'on utilise, pour former la lumière intérieure, un gaz dans lequel il y a un liquide divisé en fines gouttelettes.

13. Procédé conforme à la revendication 12, caractérisé en ce que le liquide divisé en fines gouttelettes est constitué par une solution d'une cellulose modifiée dissoute dans un solvant approprié.

14. Procédé conforme à la revendication 12 ou 13, caractérisé en ce qu'on utilise un aérosol.

15. Membrane de dialyse, en un polymère cellulosique régénéré, sous forme d'une fibre creuse dotée d'une lumière intérieure continue qui est pratiquement remplie d'un gaz, cette fibre creuse présentant une surface interne poreuse et une surface externe, caractérisée en ce que la fibre creuse a été obtenue selon un procédé conforme à la revendication 1.

16. Membrane de dialyse conforme à la revendication 15, caractérisée en ce que la fibre creuse (1) présente un taux d'allongement à sec d'au moins 50 % et un taux d'allongement au mouillé d'au moins 100 %.

17. Membrane de dialyse conforme à la revendication 15 ou 16, caractérisée en ce que le polymère cellulosique régénéré est une cellulose modifiée et/ou une chitine modifiée et/ou de la chitine.

18. Membrane de dialyse conforme à la revendication 17, caractérisée en ce que le degré de substitution de la cellulose modifiée ou de la chitine modifiée vaut de 0,02 à 0,4.

19. Membrane de dialyse conforme à l'une ou à plusieurs des revendications 15 à 18, caractérisée en ce que la surface interne (4) est formée d'un polymère différent du polymère cellulosique régénéré.

20. Membrane de dialyse conforme à la revendication 19, caractérisée en ce que le polymère différent du polymère cellulosique régénéré est constitué d'un monomère acrylique et/ou d'une oléfine et/ou d'une dioléfine.

21. Membrane de dialyse conforme à l'une ou à plusieurs des revendications 15 à 20, caractérisée en ce que la section transversale de la fibre creuse (1), perpendiculaire à l'axe de la fibre creuse, a une forme telle que l'épaisseur de paroi de la fibre creuse (1), le long de son pourtour, augmente jusqu'à une épaisseur maximale et diminue jusqu'à une épaisseur minimale, au moins une fois et de façon continue, et en ce que le rapport de l'épaisseur maximale à l'épaisseur minimale vaut de 2 à 6, en moyenne statistique.

22. Membrane de dialyse conforme à l'une ou à plusieurs des revendications 15 à 21, caractérisée en ce qu'elle est constituée de deux ou de plusieurs fibres creuses (1', 1'') filées ensemble, qui sont liées l'une à l'autre parallèlement aux axes des fibres creuses.

23. Membrane de dialyse conforme à l'une ou à plusieurs des revendications 15 à 22, caractérisée en ce que la section transversale de la fibre creuse (1, 1', 1''), perpendiculaire à l'axe de la fibre creuse, a une forme profilée.

24. Membrane de dialyse conforme à la revendication 23, caractérisée en ce que la fibre creuse (1, 1', 1'') présente à l'extérieur, le long de l'axe de la fibre, un ou plusieurs épaississements en forme de nervure.
